# EUROPEAN PATENT APPLICATION

(11) **EP 3 199 504 A1**
(43) Date of publication of application: **02.08.2017**
(21) Application number: 17152303.8
(22) Date of filing: 19.01.2017
(51) Int. Cl.: C04B 40/00

(54) **PRODUCTION PROCESS OF A FILLER WITH HIGH POZZOLANIC ACTIVITY AS MINERAL ADDITION FOR HYDRAULIC BINDERS**

(30) Priority: 26.01.2016 IT UB20160132
(71) Applicant: Cementerie Aldo Barbetti - Societa' per Azioni, 06024 Gubbio (PG) (IT)
(72) Inventor: CARBONARI, CARLO, 60035 JESI (AN) (IT); SOPRANZETTI, FRANCESCO, 61032 FANO (PU) (IT)
(74) Representative: Baldi, Claudio

(57) **Abstract**

Production process of a filler with high pozzolanic activity and low cost for concrete and for cement and/or lime- based mortar. The process comprises the following steps: measuring out fly ash and limestone in a grinding and separation installation (3) in such a way to obtain a homogeneous mixture of fly ash and limestone with particles having a diameter lower than 63 micron that would not be obtained with traditional mixing methods of pulverulent materials.

## Description

The present application for industrial invention relates to a production process of a filler with high pozzolanic activity for concrete and cement and/or limestone-based mortar in order to improve the rheological and mechanical properties, as well as the durability.

In the following description the diameter of the particles is the maximum diameter of the particles obtained by means of sieving with a sieve provided with round holes with known diameter.

In order to increase the rheological and mechanical properties, as well as the durability, products with pozzolanic activity are added to concrete and/or limestone based materials, said products being able to react with calcium hydroxide to form hydraulic compounds similar to the ones that are generated during Portland cement clinker hydration.

Said additives with high pozzolanic activity are mainly fly ash and silica fumes-based products.

Fly ash is obtained as a combustion byproduct of pulverized coal in thermal power stations and is composed of the particulate solid that is separated from the combustion fumes by means of electrostatic or mechanic filters. It is a pulverulent material of mainly siliceous kind, and particles have a 45 micron pass rate of about 70% and a specific weight of about 2,200 Kg/m³.

Fly ash is classified according to fuel type, carbonaceous fraction and fineness.

However, when used in cement products, said materials have a low pozzolanic activity.

Moreover, fly ash is known on the market, which is subjected to a treatment in order to improve its properties, said treatment generally consisting in the reduction of the carbonaceous fraction and in the optimization of the fineness.

Fly ash is introduced on the Italian market, general by electricity providers, as non-hazardous waste (code CER 100102) and its use in concrete is regulated by UNI EN 450.

Treated fly ash is available on the market:
MICRO POZZ PFA (produced by) - fly ash, classified, with pozzolanic activity comparable to fly ash as it is, at a lower cost;
MICROSIT® (produced by Bauminerl Gmbh) - fly ash, classified, subjected to an additional treatment to optimize the fineness through an air flow; such fly ash has a good pozzolanic activity at a high cost.
MAPEPLAST PZ300® (produced by Mapei S.P.A.) - it does not use fly ash, but mixtures of other products with pozzolanic or hydraulic activity: said additive is expensive.

Silica fume is a byproduct of the industry for the production of metal silicon and iron-silicon alloys in an electrical oven. In this process, a small quantity of silicon oxide SiO₂ is reduced to SiO, which passes to the gaseous phase. SiO in gaseous phase is oxidized again, forming SiO₂ that is separated as very fine powder with vitreous structure (amorphous silica at 85-98%). Although silica fumes have a high pozzolanic activity, their production process is extremely complicated. Consequently, the final product is very expensive.

JP 2000 00739 discloses a cement mixture obtained by means of a process that provides for mixing fly ash and limestone, wherein the particles are passed through a sieve of 2.5 mm.

With reference to pulverulent materials, mixing can normally occur:
- by means of a fixed body, wherein screws or blades, such as scrolls or propellers, generally move; or
- by means of a rotary body, wherein the rotary body rotates on itself and mixing is favored by fixed blades provided inside the rotary body.

The aforesaid commonly used mixers work in such a way to provide a homogeneous distribution between particles, without inducing any chemical-physical effect on the material. At the end of the mixing process, however, particles with irregular shape are obtained.

Csoke, B. et al.: "Fly ash based road construction binder" discloses that the pozzolanic activity of fly ash depends on the dimensions of the particles and is proportional to the grinding time, without indicating the grinding mode of fly ash. Such a document only relates to fly ash and does not disclose a mixture of fly ash and limestone. The calcium oxide (CaO) indicated in said document is the one available in solution, which develops from cement or limestone hydration. As a matter of fact, limestone does not produce CaO as raw material.

Jussara Tanesei: "Enhancing high volume fly ash concretes using fine limestone powder" discloses the possibility of adding a higher quantity of fly ash in the production of concrete compared to the one that is normally used, if also pulverised limestone is added in the mixture to reduce the effects of the setting time delay.

Even if not specified, Fly Ash, Limestone and Cement, together with the other concrete elements (Aggregates, Water and Additives), are mixed with a traditional mixer, which is usually a fixed body mixer in the lab tests.

The purpose of the present invention is to disclose a production process of a fly ash-based filler with high pozzolanic activity, which is inexpensive and easy to make.

Another purpose of the present invention is to obtain a filler with a pozzolanic activity that is higher than the one of fly ash and similar to the one of silica fumes, but definitely cheaper than silica fumes.

These purposes are achieved by the present invention with the characteristics of the independent claim 1.

Advantageous embodiments appear from the dependent claims.

The applicant discovered that the pozzolanic activity is reduced by the excessively large dimensions of the particles of the fly ash (higher than 45 micron) that is commonly found on the market.

In fact, each particle of fly ash has active sites that react with the calcium hydroxide of cement or limestone-based materials to form hydraulic binders that give a higher mechanical strength to the final product.

In case of large particles, the active sites remain inside the particle and may be covered by impurities, such as for example carbonaceous substances and spongy irregularities.

In order to maximize the reactivity of the active sites of the fly ash particles, the applicant understood that it was necessary to reduce the dimensions of the fly ash particles.

However, fly ash with small particles by itself did not give the desired pozzolanic activity.

Therefore, after making studies and experiments, the applicant surprisingly discovered that limestone could be added to fly ash in order to increase the pozzolanic activity of fly ash.

A material with Calcium Carbonate content higher than 80% was chosen as limestone.

The applicant discovered that, in order to obtain the best results, the weight percentage of limestone to be added had to be in the range between 5 and 25% compared to the total weight of the fly ash and of the limestone. In fact, no particular increase of the pozzolanic activity of the filler was detected for a weight percentage of limestone lower than 5% and higher than 25%.

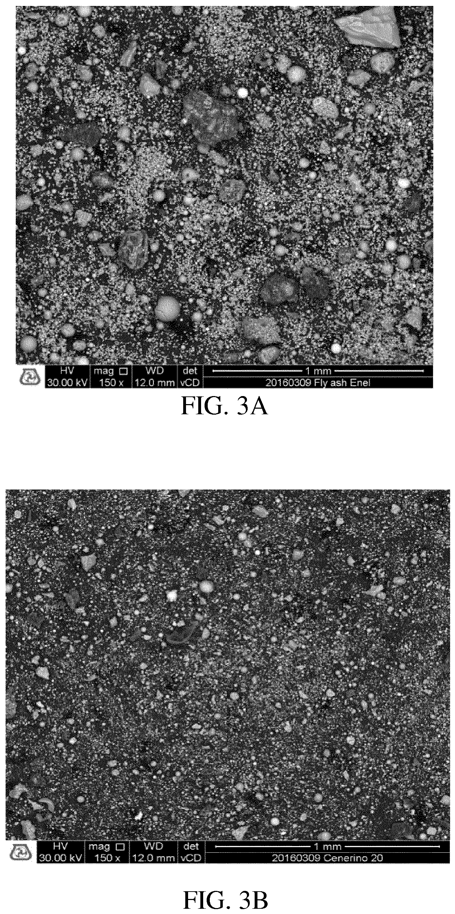

The applicant discovered that, in order to obtain the best results, the fly ash and the limestone in the aforementioned weight percentages must be ground and mixed homogeneously in a grinding installation that comprises a ball mill, in a way to obtain a very homogeneous filler with particles lower than 63 micron with a pass rate of 45 micron for 90%, where there is an intimate contact between the limestone particles and the vitreous particles of the ash (see Fig. 3B).

The addition of limestone to fly ash produces several positive effects:
- it allows to adjust the content of sulfates that are soluble in the filler according to the dosage;
- it reduces the floating phenomena in the concrete of the carbonaceous residues contained in the ash because it increases the specific weight of the ash;
- it increases the development of mechanical strength of concrete and cement-based mortar thanks to the formation of carboaluminate bonds;
- it increases that material density in the cement paste and large aggregates interface;
- it favors the refining of the ash because of the increase of the time spent in the grinding circuit of the grinding installation.

The grinding of the fly ash and limestone mixture, obtaining a filler with particles with diameter lower than 63 micron, allows to reduce the dimensions of the fly ash particles, producing many effects capable of improving the pozzolanic activity of the filler:
- it increases the specific surface of the filler by breaking the ash particles, increasing the reactive sites of the ash;
- it favors the cleaning of the filler surface from the presence of carbonaceous substances, favoring the detachment from the ash particles;
- it reduces the presence of fly ash particles with irregular shape of spongy type that cover the active sites contained in the fly ash particles.

It must be considered that the fly ash and limestone mixture contains carbonaceous organic substances that negatively affect the pozzolanic activity of the filler because they deactivate the reactive sites; moreover, they reduce the effect of superfluidifying additives in cement mixtures.

In order to remedy such negative effects of the organic substances, the process of the invention advantageously provides for heating and ventilating the fly ash and limestone mixture in order to reduce the organic substances by means of oxidation.

Additional features of the invention will appear more evident from the detailed description below, which refers to merely illustrative, not limiting embodiments, as shown in the attached drawings, wherein:
Fig. 1 is a block diagram that shows the production process of the filler for concrete according to the present invention;
Fig. 2 is a flow diagram that shows the production process of the filler for concrete according to the present invention;
Figs. 3A and 3B are two enlarged views (150x) obtained with a scanning electron microscope (SEM), which respectively show fly ash and a filler according to the present invention;
Fig. 4A is an enlarged view (1000x) that shows an unburnt particle of the fly ash of Fig. 3A;
Fig. 4B is an EDX (Energy Dispersive X-ray) analysis of the unburnt particle of Fig. 4A;
Fig. 5A is an enlarged view that shows limestone fragments and fly ash particles of the filler of Fig. 3B;
Fig. 5B is an EDX analysis of the enlarged view of Fig. 5A;
Fig. 6A is an enlarged detailed view of a limestone fragment in association with fly ash vitreous balls of the filler according to the present invention;
Fig. 6B is an EDX analysis of the enlarged view of Fig. 6A;
Figs. 7A and 7B are enlarged views that shows limestone grains and fly ash vitreous balls of the filler according to the present invention.

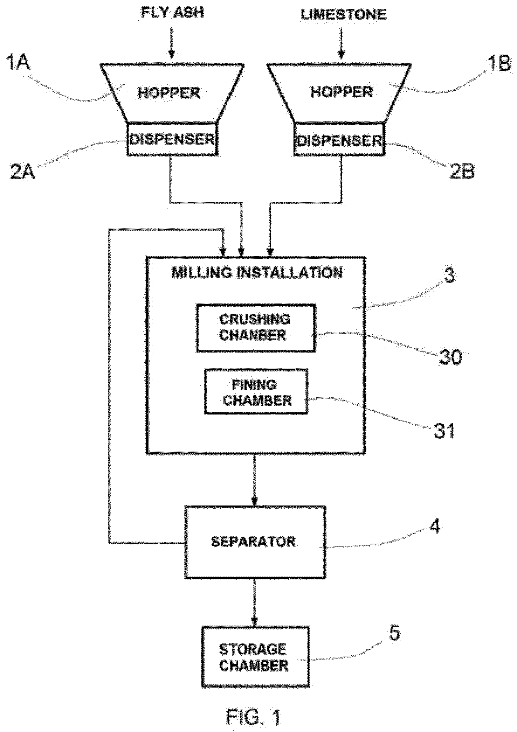

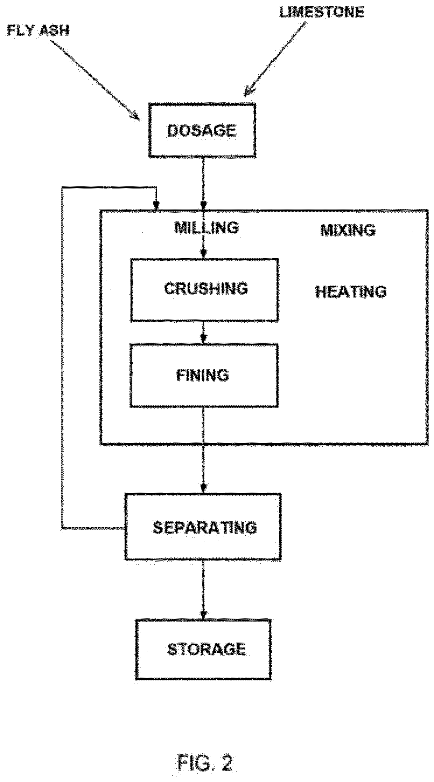

With reference to Figs. 1 and 2, fly ash and limestone are fed into hoppers (1 A, 1 B) provided with measuring devices (2A, 2B). The measuring devices (2A, 2B) preferably consist in weighing-measuring scales, which are adjusted in a way to feed fly ask in weight percentage of 75 - 95% and limestone in weigh percentage of 5-25% to a grinding installation (3). In this case the weight percentages are calculated with respect to the total weight of the initial product composed of fly ash and limestone.

The grinding installation (3) is composed of a tubular ball mill (containing about 150 tons of steel balls with a size distribution from 100 to 20 mm diameter) wherein the fly ash and the limestone are mixed, broken and refined. A series of physical processes takes place in the grinding mill, which improve the pozzolanic activity of the fly ash. The grinding installation (3) comprises a first chamber (30), which is known as breaking chamber, and a second chamber (31), which is known as refining chamber.

The mixing between fly ash and limestone takes place in the entire grinding circuit of the grinding installation (3). It must be considered that, in a grinding installation composed of a ball mill, the mixing of fly ash and limestone is more intimate and more homogeneous compared to any other type of mixing system between solids.

The processing temperature during grinding must be equal to or higher than 100°C to favor the reduction of the organic substances contained in the ash.

It must be considered that the initial product (fly ash and limestone) is fed into the grinding installation (3) with a flow rate of approximately 50 ton/hour. Moreover, air with a flow rate of approximately 30,000 m³/hour is fed into the grinding installation.

In spite of the above, an average temperature of 100°C of the fly ashlimestone mixture is obtained because of the heat that is generated inside the mill in the ball-ball impact. In fact, the filler particles between the balls receive a huge quantity of energy, which in addition to causing the grinding of materials, generates a temperature increase that is much higher than 100°C in the point of impact. The higher the iron (balls)/material (filler) ratio, the higher the quantity of energy transferred to the filler by means of the impact will be. Such value is very high (approximately 8 or 9) in the ball mills that are commonly used for cement.

The grinding process requires a high quantity of air, which is approximately equal to 30,000 m³/hour and creates a depression in the chambers (30, 31) of the mill. In fact, by working in depression, a flow of material and air is generated, which favors the oxidation of the organic substances contained in the fly ash.

In the first chamber (30) fly ash and limestone are mixed, and the limestone particles that are larger than the fly ash particles are broken. In the first chamber (30) the diameter of the particles of the fly ash and limestone mixture is reduced to a size lower than 1 mm.

In the second chamber (31) a refining or secondary grinding operation is made, wherein the filler is transformed into powder with particles having a diameter lower than 100 micron.

Advantageously, in order to obtain a filler with at least 90% of the particles with diameter lower than 45 micron, a dynamic separator is installed at the exit of the grinding installation (3) in order to adjust the size of the particles (4). The material is fed into the separator and distributed from a spreading disc into a separation compartment where the particles meet with an upward air flow that separates the larger particles from the finer particles according to the weight. The finer particles correspond to the finished product, whereas the larger ones return to the grinding circuit for additional refining.

Such a separation operation is fundamental to select the finer, and consequently more reactive particles. In this way, a filler with approximately 90% of the particles with diameter lower than 45 micron is obtained in the storage chamber (5).

Optionally, in addition to fly ash and limestone, organic and/or inorganic materials can be fed to the grinding installation in a quantity lower than 10% in weight, to improve both the performance of the grinding installation and the filler properties.

### COMPARATIVE TESTS

The determination of the pozzolanic activity of the filler obtained according to the process of the invention was measured by determining the mechanical compressive strength at 28 days of plastic mortar samples obtained in compliance with UNI EN 196.-1.

Table 1 shows the compressive strength (CS) values:

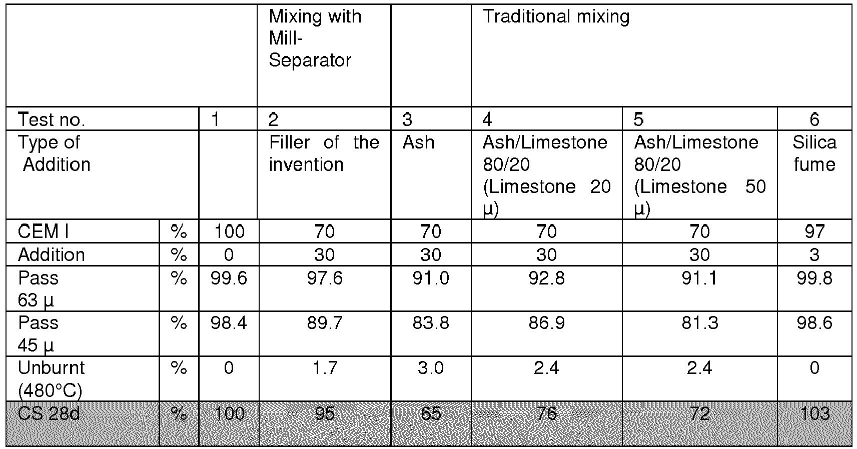

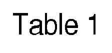

Table 1 compares the compressive strength obtained by mixing a type I cement (CEM I) with different materials, among them the Filler of the present invention, in 70/30 ratio.

A Cement/Silica fumes ratio of 97/3 was chosen for silica fumes, because a higher quantity of silica fumes significantly changes the rehology of the mixture, altering the test conditions; in practical use, the quantity of Silica fumes is in the range between 2% and 5%.

CEM I was taken as a reference, with 100% of compressive strength at 28 days.

As shown by the compressive strength % at 28 days (CS 28d), compared to CEM I, the filler obtained with the process according to the present invention (test 2) has a higher pozzolanic activity, achieving a 95% compressive strength compared to the reference sample, whereas the other mixtures made of fly ash as it is (test 3) and with ash/limestone made with traditional mixers (test 4 and 5) have a lower compressive strength regardless of having approximately the same particle size.

The results show that the pozzolanic activity of the filler is higher than the one of the fly ash and than the one of mixtures of fly ash and pulverised limestone obtained with traditional mixers, whereas it approximates the pozzolanic activity of silica fumes (test 6). However, the filler obtained with the process of the present invention has a considerably lower cost than silica fumes.

It must be considered that the mixers that are normally used in the prior art operate in such a way to provide a homogeneous distribution between the fly ash and limestone particles, without inducing any chemical-physical effect on the material.

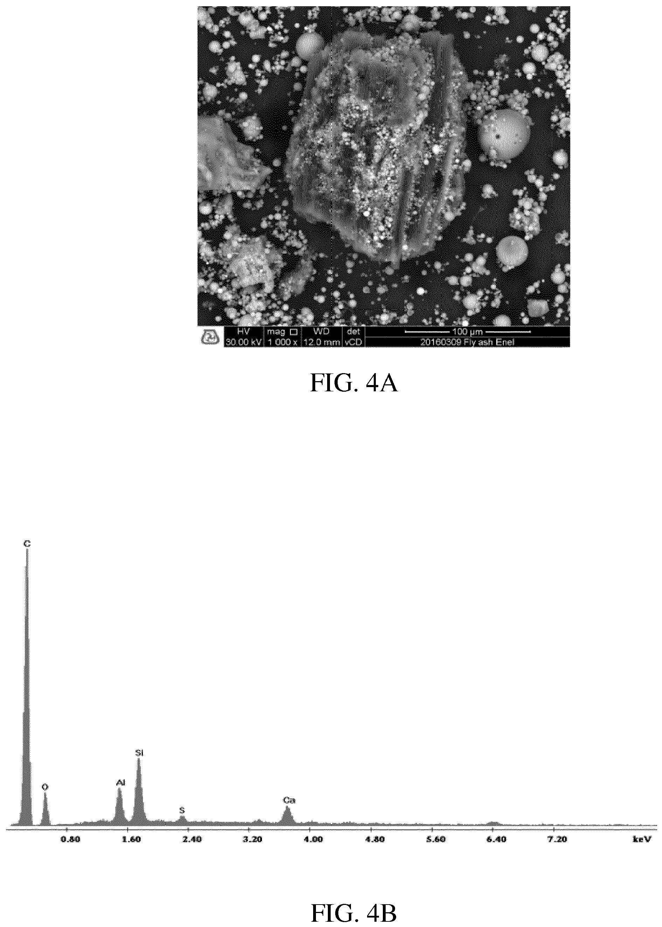

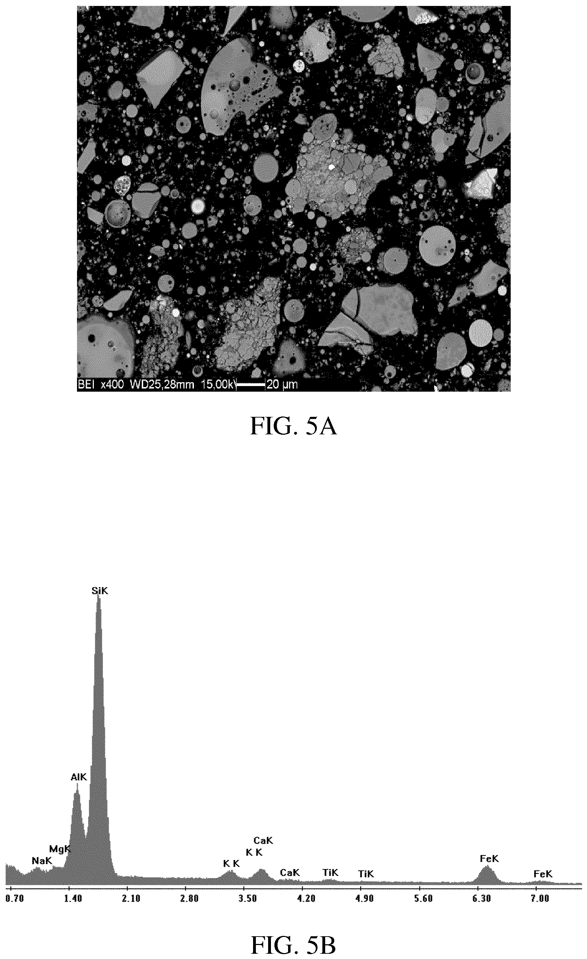

Instead, the grinding and the mixing between the fly ash and limestone made with the ball mill of the grinding installation (3) provide for:
- a higher homogenization of the particles in the filler (Fig. 3B) compared to the fly ash (Fig. 3A) where particles with a different shape and size are noted;
- an intimate contact between the limestone particles and the vitreous particles of the ash (Figs. 5A, 6A, 7A, 7B);
- a reduction in the size of the ash particles that contain carbonaceous substances, favoring the detachment of the unburnt particles from the ash particles (Fig. 4A);
- a reduction in the presence of fly ash particles with irregular shape of spongy type that cover the active sites that are contained in the fly ash particles.

Moreover, it can be noted that the process of the present invention reduces the unburnt particles.

The analysis with SEM (Figs. 3A and 3B) makes it possible to observe and compare the morphology of the fly ash and of the filler through the secondary electrons, as well as analyze the chemical elements in the points of interest by means of the EDX detector.

The two enlarged views (150x) show the different size distribution of the fly ash compared to the filler according to the invention, with a more homogeneous distribution of the fine particles in the filler of the invention.

The presence of large dark particles with irregular shape, which are shown in red, is also noted in the fly ash, possibly representing unburnt fractions (Fig. 4A). The EDX analysis (Fig. 4B) confirms that it is a carbonaceous particle contained in the fly ash.

Instead, the filler of the invention does not contain unburnt particles of carbonaceous type.

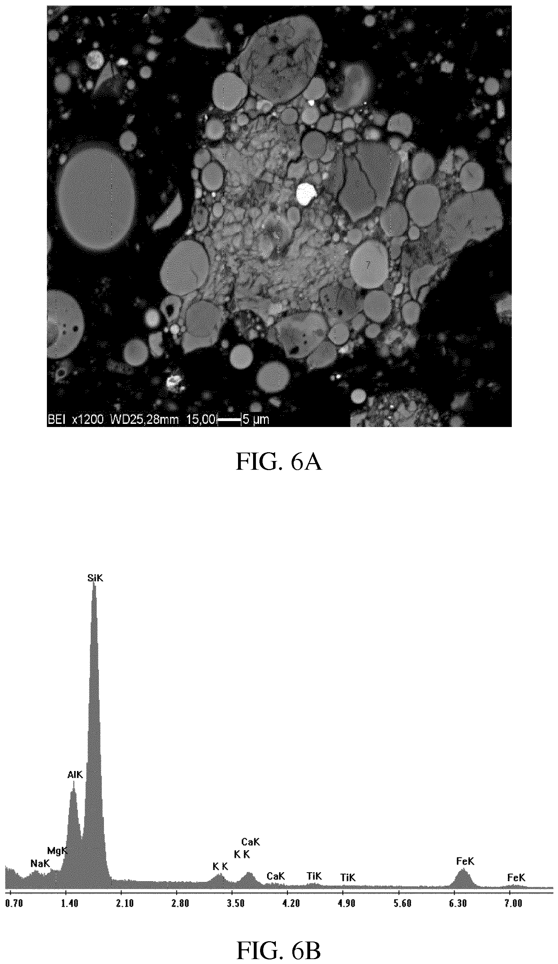

With reference to Fig. 5A, in the filler of the present invention, limestone is in the form of fragments with small dimensions (< 50 µm), that are intensely broken and frequently associated with small vitreous balls of fly ash, apparently adhering on the external edge of the limestone fragments (Fig. 6A).

The spectroscopic analyses (5B, 6B) confirm the observations made in figures 5A and 6A.

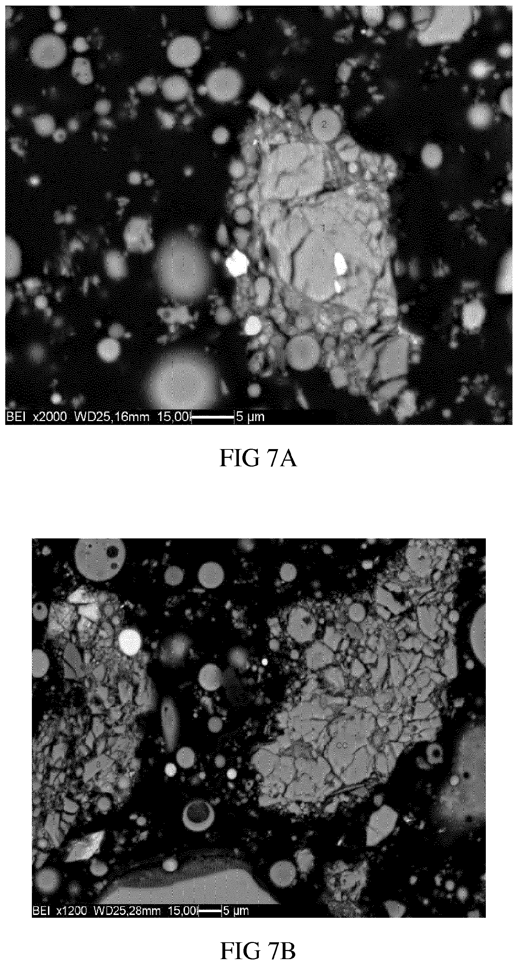

Fig. 7A shows an intensely broken limestone fragment and Fig. 7 B shows a limestone fragment in intimate association with vitreous balls of fly ash.

The results obtained in the laboratory show that the filler of the present invention has a higher pozzolanic activity compared to the one of the fly ash and to the one of a fly ash and limestone powder mixture.

In practical use for the industrial production of Concrete (according to the directives of UNI EN 206-1), the quantity of cement replaced by the filler is determined, in order to achieve the same mechanical compressive strength at 28 days, with the same water addition of a reference mixture without filler.

If the quantity of cement is replaced with an equivalent quantity of filler, in order to obtain an equivalent performance, the performance can be assessed with a value of a variable known as K, which is equal to 1.

With the filler of the invention, the K factor is 0.8, i.e. 40 Kg of cement correspond to approximately 50 Kg of filler.

With the ash, the K factor is 0.4, i.e. 40 Kg of cement correspond to approximately 100 Kg of ash.

With the silica fumes, the K factor is 1, i.e. 40 Kg of cement correspond to approximately 40 kg of silica fumes.

## Claims

1. Production process of a filler with high pozzolanic activity and low cost for concrete and for cement and/or lime- based mortar, said process comprising the following steps:
- measuring out fly ash and limestone in a grinding installation (3) in such manner that the fly ash has a weight percentage comprised between 75-95% compared to the total weight of fly ash and limestone, and the limestone has a weight percentage comprised between 5-25% compared to the total weight of fly ash and limestone,
- grinding and mixing the fly ash and the limestone in the grinding installation (3) in such manner to obtain a filler comprising a fly ash and limestone mixture with particles having a maximum diameter lower than 63 micron, wherein said production installation comprises a ball mill.

2. The process of claim 1, wherein said grinding step is made in such manner to obtain a filler with 90% of the particles having a diameter lower than 45 micron.

3. The process of claim 1 or 2, wherein said grinding installation (3) comprises:
- a first chamber (30) wherein the fly ash and limestone mixture is broken in particles with diameter lower than 1 mm, and
- a second chamber (31) wherein the fly ash and limestone mixture is refined in particles with diameter lower than 100 micron.

4. The process of any one of the preceding claims, also comprising a heating step of the fly ash and limestone mixture in the grinding installation (3) at a temperature equal to or higher than 100°C in such manner to favor a reduction of the organic substances contained in the fly ash and limestone mixture.

5. The process of any one of the preceding claims, also comprising a ventilation step of the fly ash and limestone mixture by introducing air in the grinding installation (3) in such manner to favor the oxidation of the organic substances contained in the fly ash.

6. The process of claim 6, wherein said ventilation step comprises the introduction of air in the grinding installation (3) with a flow rate of about 30,000 m³/hour.

7. The process of any one of the preceding claims, also comprising a separation step after the grinding step, wherein particles of fly ash and limestone mixture with size higher than 45 micron are sent again to the grinding step and particles of fly ash and limestone mixture with size lower than 45 micron are stored in order to obtain a filler wherein 90% of the particles has a diameter lower than 45 micron.

8. The process of claim 8, wherein said separation steps provides for using a dynamic separator, wherein the particles meet with an upward air flow that separates the larger particles from the finer particles according to the weight.

9. The process of any one of the preceding claims, wherein the grinding installation (3) is fed with organic and/or inorganic materials in weight percentage lower than 10% of the total weight, wherein said organic and/or inorganic materials are capable of improving both the performance of the grinding installation and the filler properties.
